# EUROPEAN PATENT APPLICATION

(11) **EP 4 564 072 A1**
(43) Date of publication of application: **04.06.2025**
(21) Application number: 24216263.4
(22) Date of filing: 28.11.2024
(51) Int. Cl.: G02B 6/44

(54) **ROTATABLE CABLE GUIDE FOR A TRAY ASSEMBLY OF A NETWORK RACK AND METHOD OF USING SAME**

(30) Priority: 30.11.2023 US 202363604216 P
(71) Applicant: Corning Research And Development Corporation, Corning, New York 14831 (US)
(72) Inventor: Jablonski, Filip Piotr, 91-849 Lodzkie (PL)
(74) Representative: Reddie & Grose LLP

(57) **Abstract**

A cable guide for actively supporting one or more feeder cables of a fiber optic network that are routed to a tray assembly of a network rack is disclosed. The cable guide includes an elongate support arm that extends between a base end and a tip end. The base end is configured for rotatable connection to the network rack and defines a support arm axis of rotation about which the support arm rotates relative to the network rack. The cable guide includes a guide head rotatably connected to the tip end of the elongate support arm to define a guide head axis of rotation about which the guide head rotates relative to the support arm. The guide head includes a body and a passageway extending through the body that is configured to receive and support the one or more feeder cables.

## Description

### Priority Application

This application claims the benefit of priority of U.S. Provisional Application No. 63/604,216, filed on November 30, 2023, the content of which is relied upon and incorporated herein by reference in its entirety.

### Technical Field

This disclosure relates generally to a network rack to which fiber optic cables are connected, and more particularly to a rotatable cable guide that supports one or more fiber optic cables connected to a removable tray assembly of a network rack.

### Background

The large amount of data and other information transmitted over the internet has led businesses and other organizations to develop large scale fiber optic networks for organizing, processing, storing and/or disseminating large amounts of data. Network design and cabling-infrastructure architecture are becoming increasingly large and complex to handle growing industry needs.

There are many different network architectures, and the various tasks required to distribute optical signals (e.g., splitting, splicing, routing, connecting subscribers) can occur at several locations. Regardless of whether a location is considered a central office, local convergence point, network access point, subscriber premise, or something else, fiber optic equipment is used to house components that carry out one or more of the tasks. Many types of fiber optic equipment include equipment racks or frames to which components are mounted. Organizing fiber optic cables within this equipment can be a challenge. In this disclosure, the term "equipment rack" or "network rack" or simply "rack" is used to generically refer to framework to which fiber optic components are mounted. The racks may be configured in different ways depending on the application (e.g., as a distribution frame for a carrier network, as an open-frame rack for a data center, etc.).

Although the above-mentioned type of cabling infrastructure architecture is satisfactory for present industry needs, the increasing density of equipment trays and cables within network racks requires a more adaptable and dependable cable management system, particularly for equipment trays that are selectively removable from the network rack. To this end, the heavier feeder cable bundles create stresses on each equipment tray that need to be minimized, particularly as the equipment tray is removed from the rack.

Therefore, a need exists for a cable management system for network racks that is more flexible, efficient, and capable of handling the growing density of equipment trays and cables. In particular, there is a need for a cable management system that minimizes the stresses on each equipment tray, while allowing for easy installation, maintenance, and reconfiguration of the associated cables, particularly for an equipment tray that is removable from the network rack. To this end, the cable management system should also provide sufficient protection and support for the cables during movement of the equipment tray, making it more versatile and reliable than current systems.

### Summary

The invention is defined in the independent claim. Optional features are set out in the dependent claims.

In one aspect of the disclosure, a cable guide configured to support one or more feeder cables of a fiber optic network routed to a tray assembly of a network rack is provided. The cable guide includes an elongate support arm that extends between a base end and a tip end. The base end is configured for rotatable connection to the network rack and defines a support arm axis of rotation about which the support arm rotates relative to the network rack. The cable guide also includes a guide head rotatably connected to the tip end of the elongate support arm. The guide head is rotatable relative to the support arm about a guide head axis of rotation. The guide head includes a body and a passageway that extends through the body generally along a passageway axis. The passageway is configured to receive and support the one or more feeder cables of the fiber optic network that are routed to the tray assembly of the network rack.

Optionally, the support arm axis of rotation may be substantially parallel to the guide head axis of rotation. According to another embodiment, the passageway axis may be substantially perpendicular to the guide head axis of rotation. Moreover, in one embodiment, the cable guide may include a plane of symmetry that is substantially perpendicular to the support arm axis of rotation. The symmetry allows the cable guide to be mounted to the network rack at different locations (e.g., right side vs. left side mount) but operate in a similar manner.

Optionally, the base end of the elongate support arm may include a rotation stop configured to limit rotation of the cable guide relative to the network rack about the support arm axis of rotation. The base end of the elongate support arm may also include a bore for rotatably connecting the elongate support arm to the network rack. In this embodiment, the bore may at least partially define the support arm axis of rotation.

Optionally, the tip end of the elongate support arm may include a pair of spaced apart bracket arms between which the guide head is rotatably connected to the elongate support arm. Each of the bracket arms may further include a journal configured to engage a corresponding bore in the guide head that is configured to receive the journal. In this embodiment, the pair of journals may at least partially define the guide head axis of rotation.

Optionally, the elongate support arm may include a base arm portion that includes the base end and a tip arm portion that includes the tip end. Further, the tip arm portion may be angled relative to the base arm portion by a first support arm angle. For example, the first support arm angle may be between about 40 degrees and about 70 degrees. Preferably, the first support arm angle is about 50 degrees. In this embodiment, the cable guide may further include at least one intermediate arm portion disposed between the base arm portion and the tip arm portion. The intermediate arm portion may be angled relative to the base arm portion by a second support arm angle and the tip arm portion may be angled relative to the intermediate arm portion by a third support arm angle. For example, the second support arm angle may be between about 15 degrees and about 30 degrees, and preferably is about 20 degrees. The third support arm angle may be between about 20 degrees and about 40 degrees, and preferably is about 30 degrees, for example.

According to one embodiment, the body of the guide head may include a wall having a through slot open to the passageway in the guide head. In this embodiment, the through slot may be configured to receive the one or more feeder cables for positioning the one or more feeder cables within the passageway of the guide head. In one embodiment, the through slot in the wall of the guide head may extend in a direction that is non-parallel to the passageway axis. Such an orientation of the through slot limits the likelihood of feeder cables from inadvertently escaping from the guide head.

Optionally, a tray assembly for a network rack of a fiber optic network having one or more feeder cables is provided. The tray assembly includes a mounting bracket configured to be mounted to the network rack and a tray configured to be rotatably connected to the mounting bracket to define a tray axis of rotation about which the tray rotates relative to the network rack. The tray includes a housing with a cable entrance configured to receive the one or more feeder cables of the fiber optic network. The tray assembly further includes a cable guide configured to actively support the one or more feeder cables. The cable guide includes an elongate support arm that extends between a base end and a tip end. The base end is rotatably connected the mounting bracket and rotatable about a support arm axis of rotation relative to the mounting bracket and network rack. The cable guide also includes a guide head rotatably connected to the tip end of the elongate support arm. The guide head is rotatable relative to the support arm about a guide head axis of rotation. The guide head includes a body and a passageway that extends through the body generally along a passageway axis. The passageway is configured to receive and support the one or more feeder cables of the fiber optic network that are routed to the tray assembly of the network rack.

Optionally, the tray axis of rotation is substantially parallel to the support arm axis of rotation. According to another embodiment, the tray is configured to rotatably connect to the mounting bracket at a location that is spaced from a location at which the cable guide is configured to rotatably connect to the mounting bracket. Moreover, in a further embodiment, the tray and the cable guide may be configured for rotatable movement within a common movement plane.

According to another aspect of the disclosure, a network rack of a fiber optic network having one or more feeder cables is provided. The network rack includes a tray assembly having a mounting bracket attached to the network rack and a tray rotatably connected to the mounting bracket to define a tray axis of rotation about which the tray rotates relative to the network rack. The tray includes a housing with a cable entrance configured to receive the one or more feeder cables of the fiber optic network. The tray assembly further includes a cable guide configured to actively support the one or more feeder cables. The cable guide includes an elongate support arm that extends between a base end and a tip end. The base end is rotatably connected the bracket and rotatable about a support arm axis of rotation relative to the network rack. The cable guide also includes a guide head rotatably connected to the tip end of the elongate support arm. The guide head is rotatable relative to the support arm about a guide head axis of rotation. The guide head includes a body and a passageway that extends through the body generally along a passageway axis. The passageway is configured to receive and support the one or more feeder cables of the fiber optic network that are routed to the tray assembly of the network rack. In particular, the one or more feeder cables may be received in the cable entrance of the tray housing and extend through the passageway of the guide head of the cable guide. Moreover, the tray is rotatable relative to the network rack between an operative position, where the tray housing is positioned substantially within the confines of the network rack, and an access position, where the tray housing is positioned substantially outside the confines of the network rack. In this embodiment, movement of the tray between the operative position and the access position may cause rotatable movement of the cable guide between a stowed position, where the guide head is adjacent the cable entrance of the tray housing, and a deployed position, where the guide head is spaced from the cable entrance of the tray housing and supports the one or more feeder cables being received in the cable entrance of the tray housing, respectively. In one embodiment, for example, the network rack may include a plurality of tray assemblies mounted to the network rack.

Optionally, the rotation angle of the cable guide between the stowed position and the deployed position may be between about 80% and about 95% of the rotation angle of the tray between the operative position and the access position. For example, in one embodiment, the cable guide may rotate through a rotation angle of about 80 degrees between the stowed position and the deployed position when the tray rotates through a rotation angle of about 90 degrees between the operative position and the access position. Moreover, in one embodiment, when the tray is in the access position and the cable guide is in the deployed position, the one or more feeder cables may have a substantially horizontal orientation at least between the guide head of the cable guide and the cable entrance of the tray housing.

According to another aspect of the disclosure, a method of installing at least one feeder cable in a network rack of a fiber optic network is provided. The network rack includes a tray assembly according to the aspect described above. The method includes routing an end of the at least one feeder cable to the network rack and positioning the tray in the access position, routing the at least one feeder cable through the guide head of the cable guide, and further routing the at least one feeder cable through the cable entrance and into the tray housing. The method further includes terminating the end of the at least one feeder cable and connecting the terminated end of the at least one feeder cable to a fiber optic device in the tray housing.

Optionally, routing the at least one feeder cable through the guide head of the cable guide may include inserting the at least one feeder cable through the slot in a wall of the guide head so as to extend through the guide head. In an alternative embodiment, routing the at least one feeder cable through the guide head of the cable guide may include feeding an end of the at least one feeder cable through the slot in the wall of the guide head.

Optionally, positioning the tray in the access position may include rotating the tray from the operative position to the access position. In this embodiment, rotation of the tray from the operative position to the access position may cause the cable guide to rotate from the stowed position to the deployed position. Additionally, rotation of the tray from the operative position to the access position may cause the guide head to rotate about the guide head axis of rotation. In one embodiment, positioning the tray in the operative position may include rotating the tray from the access position to the operative position. In this embodiment, rotation of the tray from the access position to the operative position may cause the cable guide to rotate from the deployed position to the stowed position. Additionally, and similar to the above, rotation of the tray from the access position to the operative position may cause the guide head to rotate about the guide head axis of rotation.

Additional features and advantages will be set forth in the detailed description which follows, and in part will be readily apparent to those skilled in the technical field of optical connectivity. In that regard, elements that are understood to be well known to persons skilled in the art may not have been shown or described in detail to avoid unnecessarily obscuring the disclosure. It is to be understood that the foregoing general description, the following detailed description, and the accompanying drawings are merely exemplary and intended to provide an overview or framework to understand the nature and character of the claims.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a schematic view illustrating an exemplary carrier network including a passive optical network in which embodiments of the disclosure may be used.
Fig. 2 is a partial perspective view of an exemplary data hall of a data center in which embodiments of this disclosure may be used.
Fig. 3 is a perspective view of an exemplary network equipment rack, illustrating a tray assembly supported by the rack according to one embodiment.
Fig. 4 is a plan view of the tray assembly of Fig. 3, illustrating a tray of the tray assembly in an operative position and a cable guide of the tray assembly in a stowed position.
Fig. 5 is a partial cross-sectional view that is similar to Fig. 4, illustrating additional details of the cable guide.
Fig. 6 is a partial cross-sectional view that is similar to Fig. 5, illustrating the tray rotated to an access position and the cable guide rotated to a deployed position.
Fig. 7 is a perspective view of the cable guide shown in Figs. 3-6.
Fig. 8 is a top view of the cable guide shown in Figs. 3-7.
Fig. 9 is a disassembled perspective view of the cable guide shown in Figs. 3-8.

### Detailed Description

Various embodiments will be further clarified by examples in the description below which pertains to a system and a method for managing fiber optic cables that are connected to an equipment tray within a network equipment rack, such as a rack used in a FTTx carrier network or a data center, for example. Specifically, the present disclosure is directed to a rotatable cable guide that can be utilized in conjunction with a rotatable equipment tray in a network rack. In that regard, the equipment tray can be rotatably removed from the network rack to provide better access to parts of the tray for installation and maintenance activities, for example. However, during rotation of the equipment tray, a length of the fiber optic cables that are connected between the equipment tray and the network rack, otherwise referred to as a bundle of fiber optic cables, is varied. For instance, when the equipment tray is rotated to fully expose it from the rack, the length of the fiber optic cable bundle that extends between the rack and the equipment tray is at its maximum. If the bundle of fiber optic cables is not properly supported, significant sagging may occur which can interfere with and damage lower equipment trays in the rack. As will be described in further detail below, the cable guide is configured to move in conjunction with the rotational movement of the equipment tray, effectively following or trailing movement of the equipment tray, in order to provide support for the bundle of fiber optic cables that extends from the rack to the equipment tray. These and other benefits and advantages of the present disclosure will be described in greater detail below.

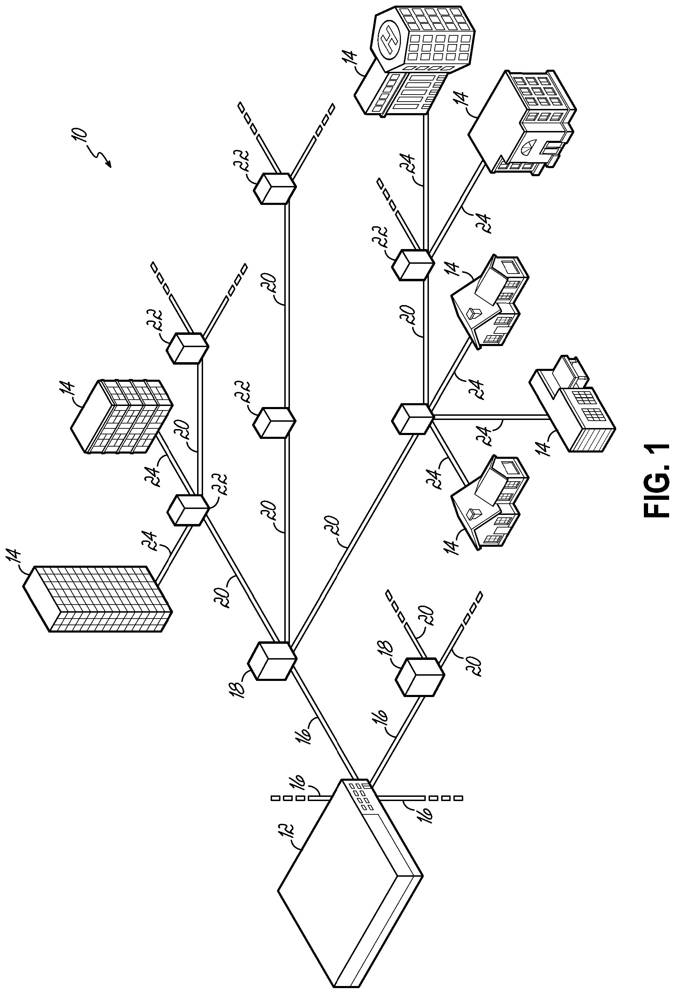

To provide context, Fig. 1 illustrates an exemplary FTTx carrier fiber optic network 10 that distributes optical signals generated at a switching point 12 (e.g., a central office) to one or more subscriber premises 14. Optical line terminals (OLTs - not shown) at the switching point 12 convert electrical signals into optical signals. Fiber optic feeder cables 16 then carry the optical signals to various local convergence points 18. The convergence points 18 act as locations for making cross-connections and interconnections (e.g., by splicing or patching cables). The local convergence points 18 often include splitters or WDM components to enable any given optical fiber in the feeder cable 16 to serve multiple subscriber premises 14. As a result, the optical signals are "branched out" from the optical fibers of the feeder cables 16 to optical fibers of fiber optic distribution cables 20 that exit the local convergence points 18.

At remote network access points 22 closer to the subscriber premises 14, some or all the optical fibers in the distribution cables 20 may be accessed to connect to one or more subscriber premises 14. Drop cables 24 extend from the network access points 22 to the subscriber premises 14, which may be single-dwelling units (SDU), multi-dwelling units (MDU), businesses, and/or other facilities or buildings. An optical network terminal (ONT - not shown) located at or inside the subscriber premises 14 receives one or more optical signals and converts the optical signals back to electrical signals at the remote distribution points or subscriber premises 14. Network racks may be located in any single one or each of the switching points 12, local convergence points 18, and remote network access points 22 in the carrier network 10. These locations are exemplary, as network racks may be located in other locations, such as in data centers.

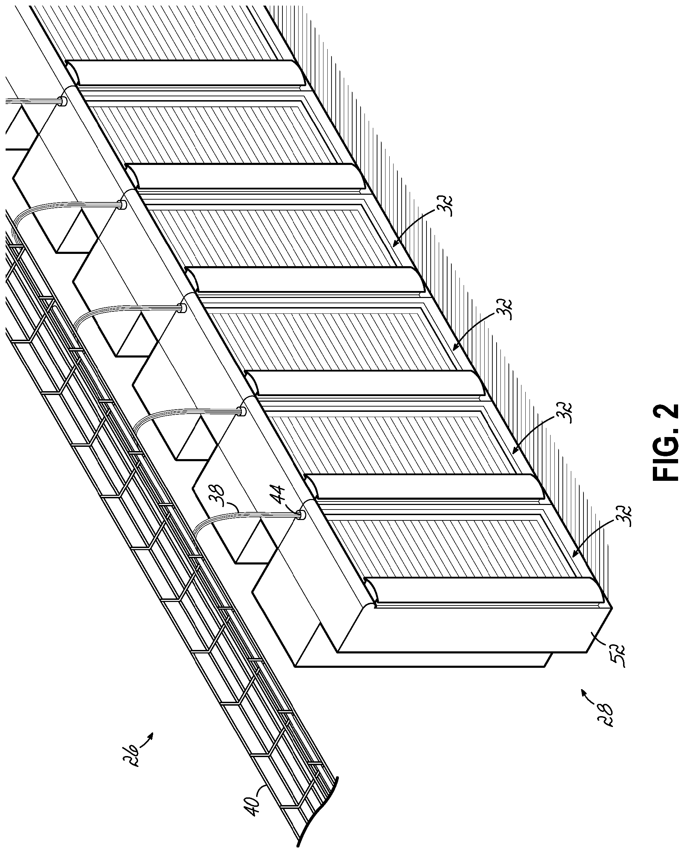

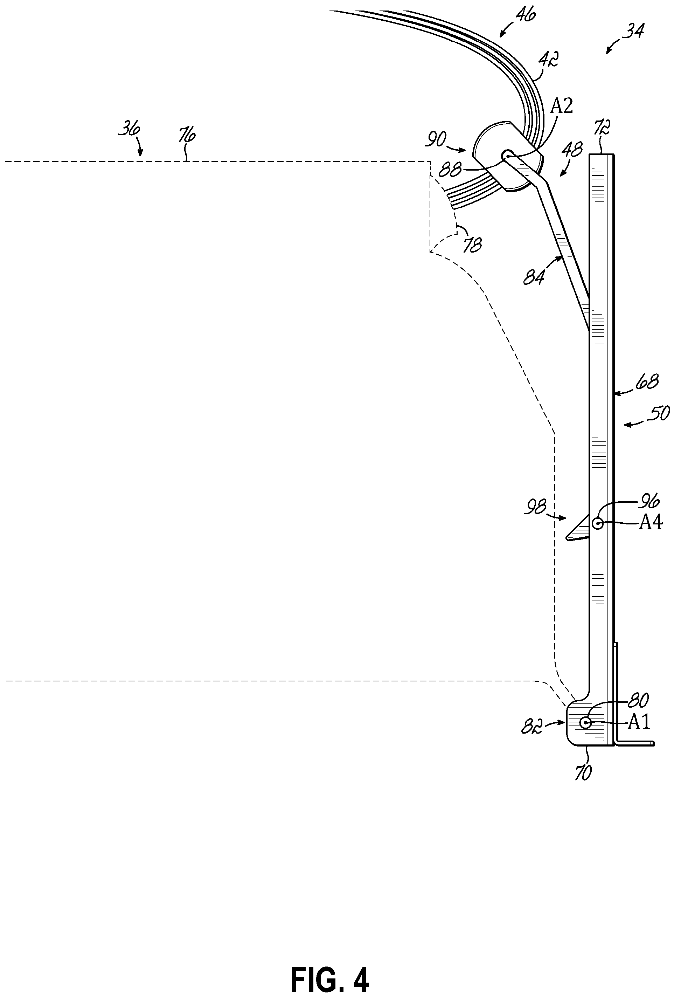

To this end, Fig. 2 illustrates an exemplary row 28 of network racks 32 for a data hall 26 of a data center. Many data centers include one or more data halls 26 with many rows like what is shown in Fig. 2. Each of the racks 32 in Fig. 2 is a vertically arranged frame. In one common arrangement, in-row distribution cables 38 are routed along a cable tray 40 above the row 28, with one or more of the in-row distribution cables 38 dropping from the cable tray 40 and into each of the racks 32 (e.g., through a port or opening 44 if a network rack 32 is part of a cabinet). Within the racks 32, the in-row distribution cables 38 may be organized into feeder cable bundles 46 (e.g., Figs. 4-6) that are connected to trays 36, as will be described in further detail below.

Again, Figs. 1 and 2 are merely examples of different applications where network racks may be used. Cable guides according to this disclosure may be used any network context where cable management is needed in a network rack.

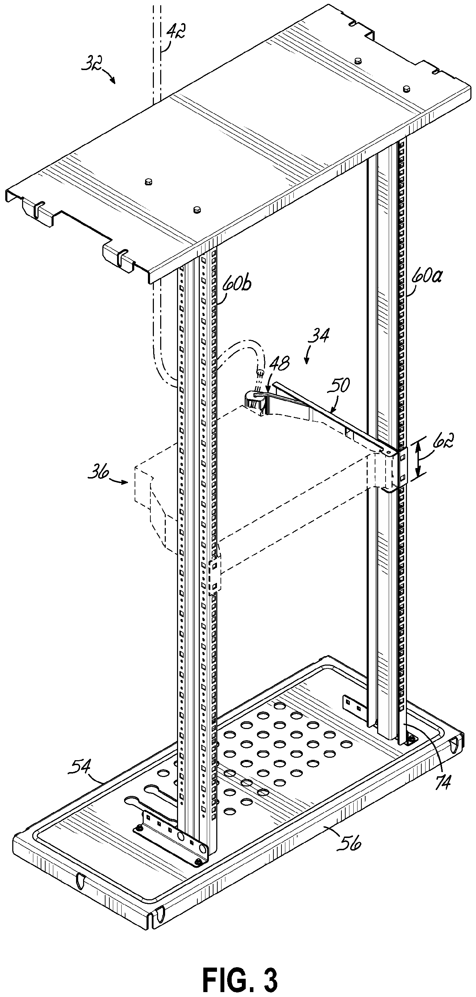

With this in mind and now referring to Fig. 3, the illustrated network rack 32 may correspond to a network rack in the FTTx carrier network 10 (Fig. 1), in the data center network supported by the data hall 26 (Fig. 2), or in any other fiber optic network. A feeder cable 42 that is schematically illustrated in Fig. 3 may likewise correspond to a different type of network cable. For example, the feeder cable 42 may correspond to any of the network cables in Fig. 1 (e.g., feeder cables 16, distribution cables 20, or drop cables 24), the in-row distribution cables 38 in Fig. 2, or another type of network cable, since the type of network cable depends on the application for which the network rack 32 is used. In general, aspects of the present disclosure are directed to a rotatable cable guide 48 for supporting one or more feeder cables 42 when the feeder cables 42 are connected to a rotatable equipment tray 36 of the network rack 32. Each equipment tray 36 may be rotatably removable from the network rack 32 and may include a corresponding cable guide 48 that supports and manages movement of the one or more feeder cables 42 connected to the equipment tray 36.

Still referring to Fig. 3, certain structural components, but not all components, of the exemplary network rack 32 are shown to illustrate an exemplary tray assembly 34 according to embodiments of the disclosure. In that regard, the tray assembly 34 includes the cable guide 48 and the equipment tray 36 which are each rotatably coupled to the network rack 32 with a mounting bracket 50 in accordance with one embodiment of the disclosure. For instance, each tray assembly 34 may occupy one shelf space (e.g., 1U) within the network rack 32. As shown, one cable guide 48 is for use with an individual equipment tray 36. In that regard, the cable guide 48 is configured to support the feeder cables 42 connected between the network rack 32 and the equipment tray 36 during movement of the equipment tray 36, as will be described in further detail below. In addition, cable guide 48 and equipment tray 36 are separate components that can be attached independently to the mounting bracket 50. This configuration allows for greater flexibility as the cable guide 48 can be added as an optional component to existing network racks 32, or a location of the cable guide 48 relative to the equipment tray 36, for example, can be adjusted. Although only one tray assembly 34 of the network rack 32 is shown, it will be understood that the network rack 32 may include a plurality of tray assemblies 34 arranged vertically in a stack within the network rack 32, as shown in Fig. 3, for example.

With reference to Figs. 2 and 3, the network rack 32 is configured to support one or more tray assemblies 34 and may include a housing 52 that defines a back side 54 and a front side 56 of the network rack 32, the equipment tray 36 being removable from the front side 56 of the network rack 32 such as for maintenance or installation activities. The housing 52 is configured to house and support certain network equipment, including the tray assemblies 34, within its interior. In that regard, the network rack 32 includes within its interior a pair of vertical frame members 60a, 60b between which each tray assembly 34 is supported. As shown, the mounting bracket 50 of the tray assembly 34 is attached to one vertical frame member 60a to rotatably support the equipment tray 36 and the cable guide 48 between the frame members 60a, 60b and within the network rack 32. However, the mounting bracket 50 may be attached to either frame member 60a, 60b to rotatably support the equipment tray 36 and the cable guide 48, and the particular positioning of the mounting bracket 50 is not intended to limit the scope of the present disclosure. The space between vertical frame members 60a, 60b, the front side 56, and the back side 54 of the network rack 32 generally defines shelf space 62 within the network rack 32 for each tray assembly 34. To this end, the mounting bracket 50 may define a height of an individual shelf space 62 of the network rack 32, for example, where at least the cable guide 48 and the equipment tray 36 of the tray assembly 34 may reside.

While not shown, the network rack 32 may further include a cable organizer attached to one vertical frame member 60a, for example. The cable organizer may include individual support shelves that correspond to the tray assemblies 34 in the network rack 32. In that regard, each support shelf of the cable organizer is configured to support a bundle 46 of feeder cables 42 connected to network equipment held within the equipment tray 36 of each tray assembly 34. Specifically, the cable organizer provides static support for each bundle 46 of feeder cables 42. The cable organizer is external to each shelf space 62 of the network rack 32 and does not move relative to the network rack 32 to support the feeder cables 42. In that regard, the feeder cables 42 enter the network rack 32 through the opening 44 in the network rack 32 (e.g., Fig. 2) and each bundle 46 of feeder cables 42 is then routed or festooned to a support shelf of the cable organizer which is located near to the equipment tray 36 to which each feeder cable 42 of the bundle 46 is to be connected (i.e., terminated). In particular, the bundle 46 of feeder cables 42 is routed from the cable organizer, through the cable guide 48, and connected to the equipment tray 36. As will be described in further detail below, the cable guide 48 generally moves in synchronization with movement of the equipment tray 36 to provide active support for a portion of the bundle 46 of feeder cables 42 extending from the cable organizer, or from elsewhere within the network rack 32, to the equipment tray 36. This prevents drooping or sagging of the bundle 46 of feeder cables 42, particularly when the equipment tray 36 is removed from the network rack 32.

With reference to Figs. 3 and 4, the mounting bracket 50 includes an elongate, generally plate-like body 68 that extends from a first end 70 configured to be located adjacent the front side 56 of the network rack 32 to a second end 72 that is configured to be located adjacent the back side 54 of the network rack 32. As shown in Fig. 3, the mounting bracket 50 is attached to the vertical frame member 60a such that the first end 70 of the mounting bracket 50 is generally flush with a front-facing side 74 of the frame member 60a. The mounting bracket 50 extends horizontally from the vertical frame member 60a in a direction toward the back side 54 of the network rack 32 such that the mounting bracket 50 is generally perpendicular to the vertical frame member 60a. To this end, the mounting bracket 50 includes a length measured as a distance between the first end 70 and the second end 72 of the mounting bracket 50. The length of the mounting bracket 50 may generally correspond to a depth of the shelf space 62, for example.

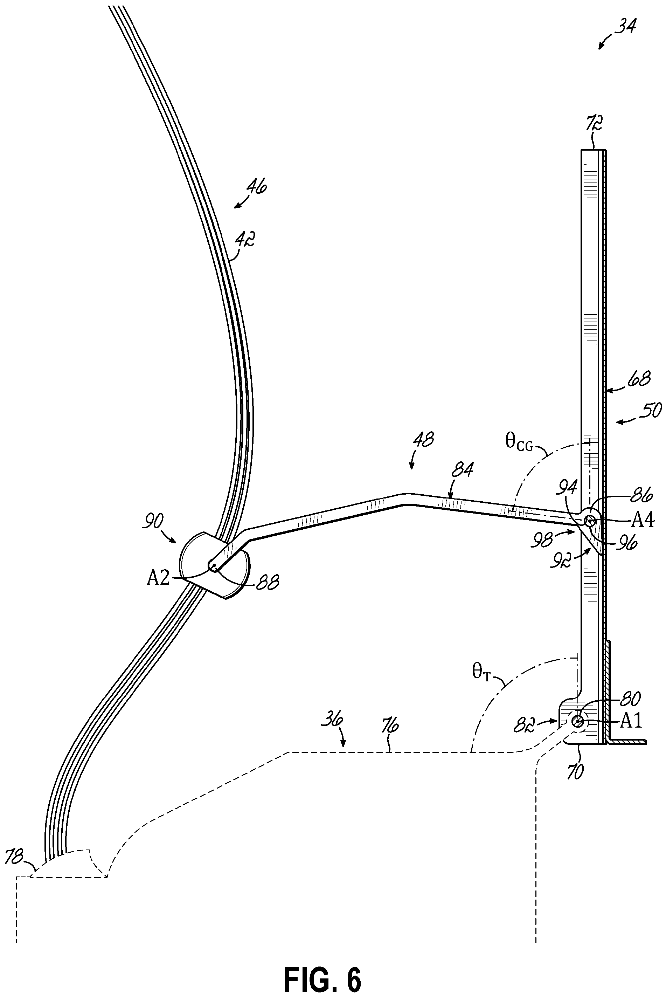

As briefly described above, the tray assembly 34 is rotatably connected to the mounting bracket 50 so as to be rotatably removable from the network rack 32. In that regard, and with reference to Figs. 3-6, the equipment tray 36 includes a housing 76 configured to house network equipment within its interior, such as one or more fiber optic devices, for example. The housing 76 includes a cable entrance 78 configured to receive one or more feeder cables 42 within its interior for termination at the one or more fiber optic devices. As shown, the equipment tray 36 is attached to the mounting bracket 50 near the first end 70 of the mounting bracket 50, and thus the front side 56 of the network rack 32, using a pin, bolt, or another appropriate fastener 80 to define a hinge joint 82. The hinge joint 82 allows the equipment tray 36 to rotate relative to the mounting bracket 50 and thus the network rack 32 about a tray axis of rotation A1, as shown. Specifically, the equipment tray 36 is rotatable relative to the network rack 32 between at least an operative position, shown in Fig. 4, and an access position, shown in Fig. 6. As the equipment tray 36 rotates about the tray axis of rotation A1 between the operative position and the access position, the equipment tray 36 rotates through a rotation angle θ_{T} of about 90 degree, as shown in Fig. 6. As used herein relative to the rotation angle θ_{T} of the equipment tray 36, "about" is intended to mean +/- 10 degrees of rotation. To this end, when the equipment tray 36 is in the operative position, the rotation angle θ_{T} is about 0 degrees and when the equipment tray 36 is in the access position, the rotation angle θ_{T} is about 90 degrees.

When the equipment tray 36 is in the operative position, as shown in e.g., Figs. 3 and 4, the tray housing 76 is positioned substantially within the confines of the network rack 32. By "substantially", it is meant that 80% or more of the equipment tray 36 is positioned within the confines of the network rack 32. When the equipment tray 36 is in the access position, as shown in Fig. 6, the tray housing 76 is substantially positioned outside the confines of the network rack 32. By "substantially", it is meant that 95% or more of the equipment tray 36 is positioned outside the confines of the network rack 32. The equipment tray 36 may be moved to the access position for maintenance or installation activities, such as to connect or disconnect one or more feeder cables 42 to/from the equipment tray 36. During normal use, the equipment tray 36 may be positioned in the operative position.

With continued reference to Figs. 3-6, the cable guide 48 of the tray assembly 34 is attached to the mounting bracket 50 in a rotatable manner. As a result, this allows the equipment tray 36 and the cable guide 48 to move together, or rotate, in a common horizontal movement plane which helps to support and prevent drooping of the one or more feeder cables 42 during rotational movement of the equipment tray 36, as will be described in further detail below. As shown, the cable guide 48 includes an elongate support arm 84 that extends between a base end 86 and a tip end 88 which includes a guide head 90 rotatably supported therefrom. The guide head 90 is rotatable about a guide head axis of rotation A2, as indicated by directional arrows A3. To this end, the guide head 90 is configured to receive and support the one or more feeder cables 42 therethrough, as shown.

The base end 86 of the support arm 84 includes a rotation stop 92 and is configured for connection to the mounting bracket 50. Specifically, the base end 86 includes a bore 94 configured to receive a pin, bolt, or another appropriate fastener 96 to rotatably connect the support arm 84 of the cable guide 48 to the mounting bracket 50. The rotatable connection defines a hinge joint 98 that allows the cable guide 48 to rotate relative to the mounting bracket 50 and the network rack 32 about a cable guide axis of rotation A4, as shown. Notably, the support arm axis of rotation A4 is substantially parallel to the guide head axis of rotation A2 and the tray axis of rotation A1. By "substantially", it is meant that the relationship between each of the support arm axis of rotation A4, the guide head axis of rotation A2, and the tray axis of rotation A1 may be within +/- 3 degrees of an exact parallel relationship.

With continued reference to Figs. 3-6, the hinge joint 98 of the cable guide 48 is spaced a distance along the length of the mounting bracket 50 from the hinge joint 82 of the equipment tray 36. In particular, the hinge joint 98 of the cable guide 48 is located between the hinge joint 82 of the equipment tray 36 and the second end 72 of the mounting bracket 50. Stated differently, the hinge joint 98 of the cable guide 48 is located closer to the second end 72 of the mounting bracket 50 compared to the hinge joint 82 of the equipment tray 36. This configuration allows space for the rotation stop 92 of the cable guide 48 to engage the mounting bracket 50, as will be described in further detail below.

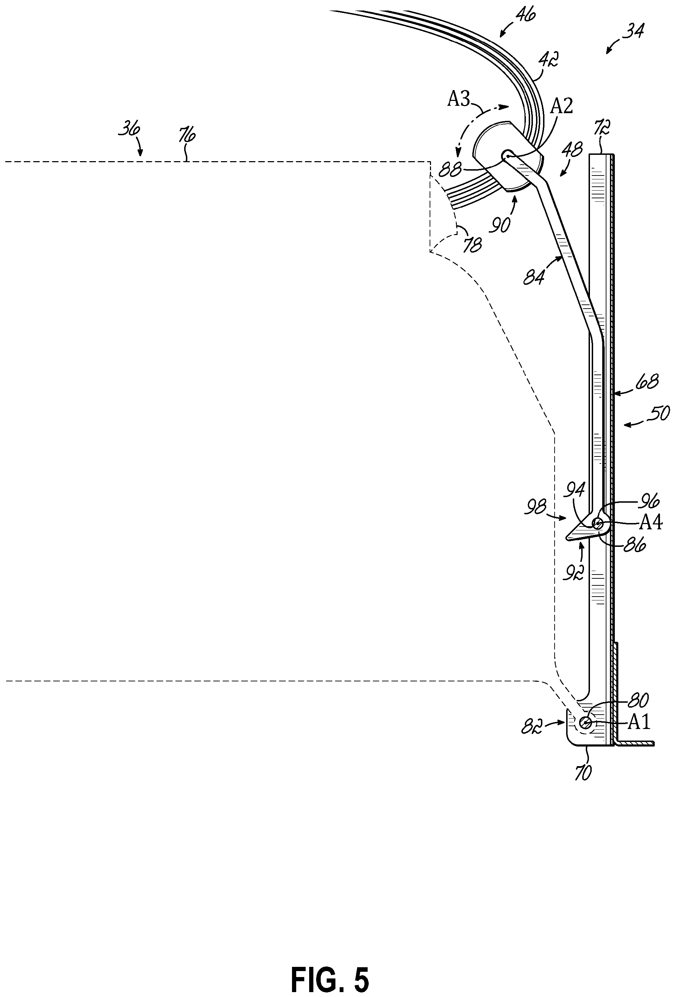

The cable guide 48 is rotatable relative to the mounting bracket 50 and the network rack 32 between at least a stowed position, shown in Fig. 5, and a deployed position, shown in Fig. 6. As the cable guide 48 rotates about the support arm axis of rotation A4, the cable guide 48 rotates through a rotation angle θ_{CG} of about 80 degrees between the stowed position and the deployed position. As used herein relative to the rotation angle θ_{CG} of the cable guide 48, "about" is intended to mean +/- 10 degrees of rotation. To this end, when the cable guide 48 is in the stowed position, the rotation angle θ_{CG} is about 0 degrees and when the cable guide 48 is in the deployed position, the rotation angle θ_{CG} is about 80 degrees.

When the cable guide 48 is in the stowed position, as shown in Fig. 5, the support arm 84 is adjacent the mounting bracket 50 so as to extend generally along the length of the mounting bracket 50. Furthermore, the guide head 90 is positioned adjacent the second end 72 of the mounting bracket 50 so as to be in close proximity to the cable entrance 78 of the tray housing 76.

When the cable guide 48 is in the deployed position, as shown in Fig. 6, the support arm 84 is rotated away from the mounting bracket 50 to position the guide head 90 away from the mounting bracket 50 and generally at a central location between the vertical frame members 60a, 60b of the network rack 32. When so positioned, the guide head 90 is also spaced a distance from the cable entrance 78 of the tray housing 76 to support the one or more feeder cables 42 being received in the cable entrance 78 of the tray housing 76. To create separation between the guide head 90 and the cable entrance 78, the rotation angle θ_{CG} of the cable guide 48 between the stowed position and the deployed position is between about 80% to about 95% of the rotation angle θ_{T} of the equipment tray 36 between the operative position and the access position. For example, the cable guide 48 rotates through a rotation angle of about 80 degrees between the stowed position and the deployed position when the equipment tray 36 rotates through a rotation angle of about 90 degrees between the operative position and the access position. Rotation of the cable guide 48 is stopped short of the full rotation of the equipment tray 36 as a result the rotation stop 92 engaging the mounting bracket 50. This configuration creates the spaced distance between the guide head 90 and the cable entrance 78 when in the deployed position and the access position, respectively. To this end, the distance between the guide head 90 and the cable entrance 78 is greater when the cable guide 48 and the equipment tray 36 are in the deployed and access positions, respectively, compared to when in the stowed and operative positions, respectively. By spacing the guide head 90 appropriately from the cable entrance 78 of the equipment tray 36, particularly when in the deployed position, the cable guide 48 can effectively support the bundle 46 of feeder cables 42 in a nearly horizontal position, thereby minimizing any drooping of the cables as they extend from the equipment tray 36 to network rack 32.

As briefly described above, movement of the equipment tray 36 between the operative position (Figs. 3 and 4) and the access position (Fig. 6) causes rotatable movement of the cable guide 48 between the stowed position (Fig. 5) and the deployed position (Fig. 6). For example, when the equipment tray 36 is in the operative position, the cable guide 48 will be moved to the stowed position. Namely, the cable guide 48 extends along the mounting bracket 50 so as to be positioned directly between the mounting bracket 50 and equipment tray 36. As the equipment tray 36 is rotated from the operative position to the access position, the feeder cables 42 are pulled through the guide head 90 of the cable guide 48. The pulling movement of the feeder cables 42 through the guide head 90 causes movement of the cable guide 48 about the support arm axis of rotation A4. Specifically, movement of the equipment tray 36 is transferred to the cable guide 48 through movement of the feeder cables 42 due to an appropriate amount of friction generated between surfaces of the feeder cables 42 and the guide head 90. To this end, as the equipment tray 36 is rotated to the access position, the cable guide 48 is rotated to the deployed position.

Similarly, movement of the equipment tray 36 from the access position to the operative position rotates the cable guide 48 back to the stowed position. In that regard, as the equipment tray 36 is rotated from the access position to the operative position, the feeder cables 42 are pushed through the guide head 90 of the cable guide 48 in a direction toward the back side 54 of the network rack 32. The pushing movement of the feeder cables 42 through the guide head 90 causes movement of the cable guide 48 about the support arm axis of rotation A4. Further, as the equipment tray 36 is rotated from the access position to the operative position, the distance or space between the guide head 90 of the cable guide 48 and the cable entrance 78 of the equipment tray 36 lessens. In that regard, as the space between the cable entrance 78 of the equipment tray 36 and the guide head 90 lessens, movement of the feeder cables 42 through the guide head 90 may slow to a stop, particularly as the equipment tray 36 and the cable guide 48 near the operative position and stowed position, respectively.

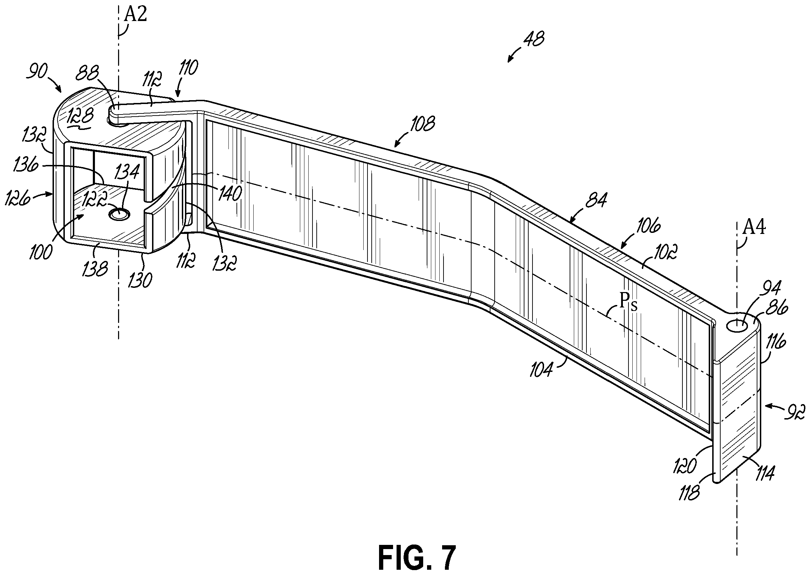

Throughout rotational movement of the cable guide 48 between the stowed position and the deployed position, and vice versa, the guide head 90 may rotate about the guide head axis of rotation A2 to maintain alignment of the guide head 90, and more particularly, a passageway 100 through the guide head 90 (e.g., Fig. 7), with the cable entrance 78 of the equipment tray 36 which prevents undesirable bends and stresses on the bundle 46 of feeder cables 42. For example, the guide head 90 may rotate any amount up to about 70°, and preferable between about 60° to about 70°, about the guide head axis of rotation A2 as the cable guide 48 is moved between the stowed position and the deployed position, and vice versa. However, rotational movement of the guide head 90 about the guide head axis of rotation A2 can vary due to several factors, such as a rigidness and thickness of the feeder cables 42, density of the feeder cables 42 (i.e., the number of feeder cables 42 positioned in the passageway 100 of the guide head 90), entry position of the feeder cables 42 (i.e., an orientation or direction from which the cables 42 are fed into the guide head 90), spacing between the tray axis of rotation A1 and the support arm axis of rotation A4 along the mounting bracket 50, or other variables, such as a mounting height of the cable guide 48 relative to the tray assembly 34, for example.

Having described certain details of the tray assembly 34 and its operation, additional details of the cable guide 48 will now be described with reference to Figs. 7-9. As briefly described above, the cable guide 48 includes the elongate support arm 84 which extends from the base end 86 to the tip end 88 where the guide head 90 is located. In that regard, the cable guide 48 includes a length that is measured as a distance between the base end 86 of the support arm 84 and an outermost periphery of the guide head 90. The length of the cable guide 48 is generally less than a width of a shelf space 62 on the network rack 32 (i.e., a distance between vertical frame members 60a, 60b) so that the cable guide 48 may rotate to the deployed position where the guide head 90 is generally centrally located between the vertical frame members 60a, 60b of the network rack 32. To this end, the length of the cable guide 48 may be between about 30% and about 70% the width of the shelf space 62. The cable guide 48 also includes a height that is measured as a distance between an upper surface 102 and a lower surface 104 of the support arm 84. The height of the cable guide 48 may be configured to match the height of a shelf space 62 on the network rack 32, for instance. Alternatively, the height of the cable guide 48 may be a portion of the height of a shelf space 62, such as half the height, for example.

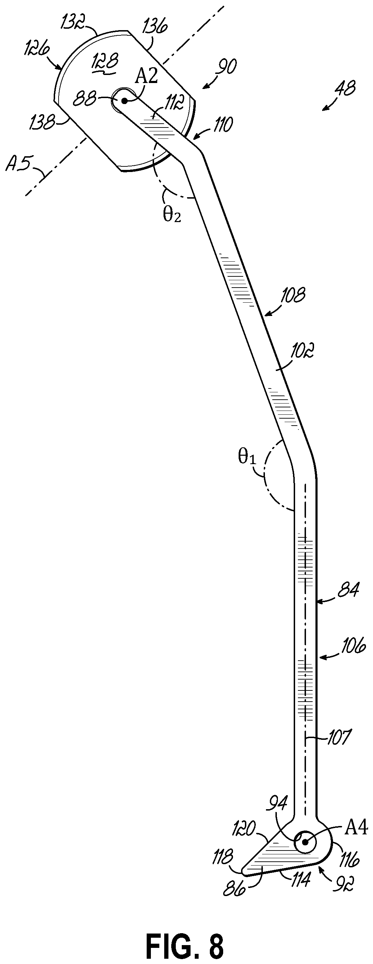

With continued reference to Figs. 7-9, the elongate support arm 84 is slightly curved to have a generally C-shaped transverse cross-section. In that regard, the support arm 84 includes a base arm portion 106, an intermediate arm portion 108, and a tip arm portion 110. The base arm portion 106 includes the base end 86, is generally plate-like in shape, and extends from the base end 86 to the intermediate arm portion 108. The intermediate arm portion 108 is generally plate-like in shape and extends from the base arm portion 106 to the tip arm portion 110 at an angle relative to the base arm portion 106 to define a first support arm angle θ₁, as shown in Fig. 8. The first support arm angle θ₁ is between about 15 degrees and about 30 degrees, and preferably is about 20 degrees. The tip arm portion 110 is defined by a pair of spaced apart bracket arms 112 that are configured to rotatably support the guide head 90 therebetween, as will be described in further detail below. Each bracket arm 112 extends from the intermediate arm portion 108 to the tip end 88 of the cable guide 48 at an angle relative to the intermediate arm portion 108 to define a second support arm angle θ₂, as shown in Fig. 8. The second support arm angle θ₂ is between about 20 degrees and about 40 degrees, and preferably is about 30 degrees. To this end, the tip arm portion 110 is angled relative to the base arm portion 106 to define a total angle of curvature of the support arm 84 between the base end 86 and the tip end 88. For example, the total angle of curvature of the support arm 84 may be equal to the combined total of the first support arm angle θ₁ and the second support arm angle θ₂. In the exemplary embodiment shown, the total angle of curvature of the support arm 84 is between about 40 degrees and about 70 degrees, and preferably is about 50 degrees. However, in an embodiment where the intermediate arm portion and the base arm portion form a straight arm (i.e., there is no first support arm angle θ₁), the total angle of curvature of the support arm 84 may be equal to the second support arm angle θ₂).

The curved or angled configuration of the support arm 84 of the cable guide 48 provides for improved stiffness for supporting heavier feeder cable bundles. In that regard, while it is within the scope of the disclosure to have a straight support arm 84, a curved support arm 84 distributes the weight or load of the cable bundle 46 more evenly along the length of the arm 84. Specifically, the curved shape of the arm 84 allows it to absorb and distribute the weight more effectively, reducing stress concentration points that would occur in a straight arm, for example. This results in a more stable and stronger support structure. To this end, it has been observed that the cable guide 48 is most effective structurally when the first support arm angle θ₁ is between approximately 15 to 30 degrees, and preferably is about 20 degrees. Similarly, the angled configuration of the tip arm portion 110 further improves the structural integrity of the support arm 84, and it has been observed that the cable guide 48 is most effective structurally when the second tip arm portion 110 is angled between approximately 20 degrees and about 40 degrees, and preferably is about 30 degrees. As briefly described above, when the cable guide 48 is in the deployed position, as shown in Fig. 6, for example, the angled configuration of the tip arm portion 110 causes the guide head 90 to rotate to thereby rotate the bundle 46 of feeder cables 42 away from the support arm 84. This is important because if the bundle 46 of feeder cables 42 were to come into contact with the support arm 84, it could cause wear and damage to the feeder cables 42 over time.

As briefly described above, the base 86 of the of the support arm 84 is configured for connection to the mounting bracket 50. Furthermore, the base 86 includes the bore 94 which at least partially defines the support arm axis of rotation A4. For example, an axial center of the bore 94 may define the support arm axis of rotation A4. The base 86 of the support arm 84 further includes the rotation stop 92 that is configured to engage the mounting bracket 50 to limit rotation of the cable guide 48 about the support arm axis of rotation A4 relative to the mounting bracket 50 and network rack 32. In particular, the rotation stop 92 is configured to stop rotation of the cable guide 48 at the desired deployed position. As shown in Fig. 8, the rotation stop 92 is generally triangular in transverse cross-section and includes a base surface 114 that extends between a rounded back surface 116 and a tip edge 118 of the rotation stop 92. The rotation stop 92 further includes a tapered surface 120 that extends between the tip edge 118 of the rotation stop 92 and the base arm portion 106. When the cable guide 48 is in the deployed position, as shown in Fig. 6, the base surface 114 is configured to engage the mounting bracket 50. The base surface 114 may be angled relative to a longitudinal axis 107 (Fig. 8) of the base arm portion 106. For example, the base surface 114 may be at an angle of between about 90 degrees and about 110 degrees relative to the longitudinal axis 107 of the base arm portion 106, and preferably an angle of about 100 degrees.

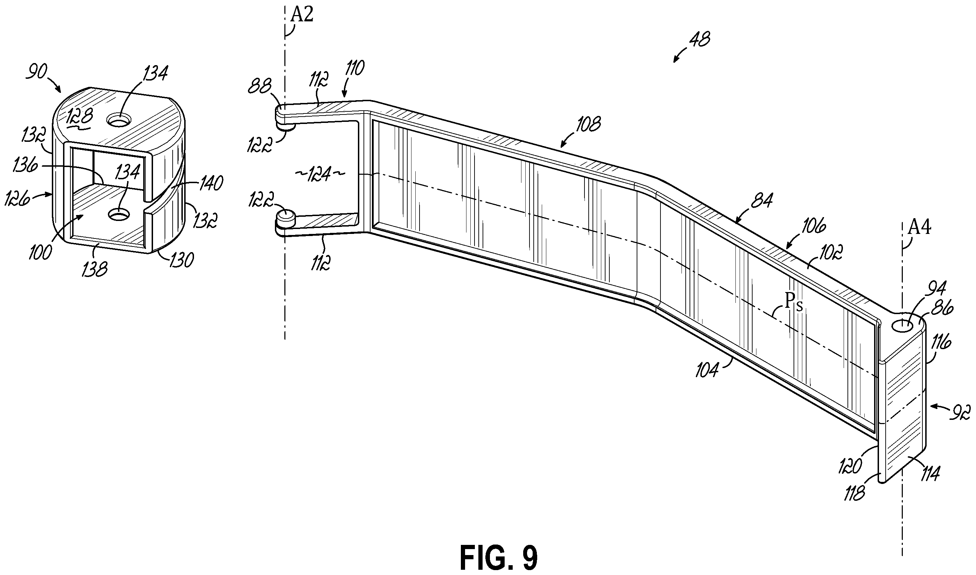

As best shown in Fig. 9, the cable guide 48 includes a plane of symmetry Ps that is substantially perpendicular to the support arm axis of rotation A4. This allows the support arm 84 to be installed to either vertical frame member 60a, 60b of the network rack 32, depending on which side the bundle 46 of feeder cables 42 is being fed into the equipment tray 36, for example.

With continued reference to Figs. 7-9, the guide head 90 is rotatably supported by the tip arm portion 110 of the support arm 84 and rotatable about the guide head axis of rotation A2. Specifically, the guide head 90 is supported between the pair of bracket arms 112 which each include a journal or trunnion 122 (hereinafter referred to as "journal") configured to engage the guide head 90. In that regard, the journals 122 may at least partially define the guide head axis of rotation A2. For example, an axial center of the journals 122 may define the guide head axis of rotation. To this end, the guide head 90 may be rotatable 360 degrees about the guide head axis of rotation A2. As shown in Fig. 9, the pair of bracket arms 112 define a generally rectangular space 124 configured to receive the guide head 90. In particular, only a portion of the guide head 90 is received within the space 124 between the pair of bracket arms 112, such as approximately half of the guide head 90.

As briefly described above, the guide head 90 is configured to receive and support the bundle 46 of one or more feeder cables 42. In an exemplary embodiment, the guide head 90 includes a body 126 defined by a top wall 128, a base wall 130, and a pair of generally curved sidewalls 132. The top wall 128 and the base wall 130 each include a centrally located bore 134 configured to receive the journal 122 of one of the respective bracket arms 112. The body 126 of the guide head 90 further includes the passageway 100 which extends through the body 126 along a passageway axis A5 (e.g., Fig. 8). As shown, the body 126 of the guide head 90 includes a first opening 136 to the passageway 100 on one side of the body 126 and a second opening 138 to the passageway 100 on an opposite side of the body 126. In an exemplary embodiment, the passageway axis A5 is substantially perpendicular to the guide head axis of rotation A2.

The bundle 46 of one or more feeder cables 42 may be disposed in the passageway 100 by routing them through the passageway 100 via the first or second opening 136, 138. In that regard, the bundle 46 of one or more feeder cables 42 may be routed through the passageway 100 of the guide head 90 while it is attached to the elongate support arm 84. Alternatively, the guide head 90 may be removed from the elongate support arm 84 to facilitate positioning of the bundle 46 of one or more feeder cables 42 through the passageway 100. Once the bundle 46 of one or more feeder cables 42 is disposed in the passageway 100, the guide head 90 may be attached to the tip arm portion 110 of the elongate support arm 84, as described above. To this end, the engagement between the journals 122 of the tip arm portion 110 and the bores 134 of the guide head 90 is configured for relatively easy installation and removal of the guide head 90 to/from the elongate support arm 84. The engagement between the guide head 90 and the tip arm portion 110 may be considered a snap-fit.

In another embodiment, the one or more feeder cables 42 may be positioned within the passageway 100 by inserting the one or more feeder cables 42 through a slot 140 formed in one sidewall 132 of the guide head 90. As shown, the slot 140 is an elongate through slot 140 in the sidewall 132 that is open to the passageway 100. The slot 140 extends from the first opening 136 to the passageway 100 on one side of the body 126 to the second opening 138 to the passageway 100 on the opposite side of the body 126. In one embodiment, the slot 140 divides the sidewall 132 into an upper wall portion and a lower wall portion. As shown, the through slot 140 extends in a direction that is non-parallel to the passageway axis A5. This non-parallel or angled configuration of the slot 140 allows one or more feeder cables 42 to be inserted through the slot 140 and positioned within the passageway 100, but prevents or limits the feeder cables 42 from accidentally falling out of the passageway 100 through the slot 140. To remove the feeder cables 42 from the passageway 100 through the slot 140, they must be angled in a specific way to align with the orientation of the slot 140. Although the guide head 90 can rotate 360 degrees around the guide head axis of rotation A2, during operation, the slot 140 may be positioned to face outwardly from the tip end 88 of the cable guide 48 for accessibility.

Having described certain details of the cable guide 48 of the tray assembly 34, details of a method of installing at least one feeder cable 42 in a network rack 32 will now be described. The network rack 32 may include at least one tray assembly 34 as described above with respect to Figs. 1-9. In that regard, feeder cables 42 must first be routed from an overhead cable tray 40 to the network rack 32 where a terminal end of each feeder cable 42 is fed into the network rack 32 through the opening 44 in the rack housing 52, for example. Once the feeder cables 42 are positioned within the network rack 32, the feeder cables 42 may be organized into individual bundles 46 of feeder cables 42 that are configured to be connected to a respective equipment tray 36 of a tray assembly 34, as will be described in further detail below.

To connect one or more feeder cables 42 of a corresponding bundle 46 to an equipment tray 36, the equipment tray 36 should be rotated to the access position (Fig. 6). For example, the equipment tray 36 may be rotated from the operative position to the access position or to an intermediate position that is near the access position. When rotated to the access position, the equipment tray 36 is removed from the network rack 32 to expose the cable entrance 78 to the housing 76 of the equipment tray 36 for access. During this operation, the cable guide 48 may also be rotated to the deployed position to provide access to the guide head 90. However, the cable guide 48 does not necessarily need to be rotated completely to the deployed position to receive the bundle 46 of one or more feeder cables 42 and may be rotated to an intermediate position that is between the stowed position (Fig. 5) and the deployed position (Fig. 6). Once the cable guide 48 is in a position other than the stowed position, the one or more feeder cables 42 may then be routed through the passageway 100 of the guide head 90 and into the cable entrance 78 of the tray housing 76 where the end of each feeder cable 42 is terminated. The terminated end of each feeder cable 42 may be connected to a fiber optic device or other optical fibers located within the housing 76 of the equipment tray 36. In one embodiment, the one or more feeder cables 42 may be routed through the guide head 90 by feeding or routing the one or more feeder cables 42 through the passageway 100 via the first and second opening 136, 138. Alternatively, the one or more feeder cables 42 may be inserted through the slot 140 to be disposed within the passageway 100 of the guide head 90, as described above.

Once the one or more feeder cables 42 have been routed through the guide head 90 and connected to the equipment tray 36, the equipment tray 36 may be rotated from the access position (Fig. 5) to the operative position (Fig. 6) which causes the cable guide 48 to be rotated from the deployed position to the stowed position, as described above. To this end, once the one or more feeder cables 42 are routed through the guide head 90 and connected to the equipment tray 36, movement of the equipment tray 36 from the operative position to the access position causes the cable guide 48 to rotate from the stowed position to the deployed position. Furthermore, rotation of the equipment tray 36 about the tray axis of rotation A1 may also cause the guide head 90 to rotate about the guide head axis of rotation A2. In that regard, as the cable guide 48 rotates about the support arm axis of rotation A4, the guide head 90 rotates about the guide head axis of rotation A2 to generally maintain alignment of the passageway 100, and in particular the passageway axis A5, with the cable entrance 78 of the equipment tray 36. This ensures that the one or more feeder cables 42 maintains a substantially horizontal orientation at least between the guide head 90 and the cable entrance 78, as shown in Fig. 6. While the method above is described with respect to one tray assembly 34 of the network rack 32, it will be understood that the network rack 32 may contain multiple tray assemblies 34, and that this process may be repeated to connect one or more feeder cables 42 to the equipment tray 36 of each tray assembly 34 of the network rack 32.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The disclosure in its broader aspects is therefore not limited to the specific details, representative apparatus and methods and illustrative examples shown and described. Accordingly, departures may be made from such details without departing from the scope of the disclosure.

## Claims

1. A cable guide configured to support one or more feeder cables of a fiber optic network routed to a tray assembly of a network rack, the cable guide comprising:
an elongate support arm that extends between a base end and a tip end, the base end configured for rotatable connection to the network rack and defining a support arm axis of rotation about which the support arm rotates relative to the network rack; and
a guide head rotatably connected to the tip end of the elongate support arm to define a guide head axis of rotation about which the guide head rotates relative to the support arm, the guide head comprising:
a body; and
a passageway extending through the body generally along a passageway axis, the passageway configured to receive and support the one or more feeder cables of the fiber optic network being routed to the tray assembly of the network rack.

2. The cable guide of claim 1, wherein the support arm axis of rotation is substantially parallel to the guide head axis of rotation.

3. The cable guide of claim 1 or 2, wherein the passageway axis is substantially perpendicular to the guide head axis of rotation.

4. The cable guide of any of the preceding claims, wherein the base end of the elongate support arm includes a rotation stop configured to limit rotation of the cable guide relative to the network rack about the support arm axis of rotation.

5. The cable guide of any of the preceding claims, wherein the base end of the elongate support arm includes a bore for rotatably connecting the elongate support arm to the network rack, the bore at least partially defining the support arm axis of rotation.

6. The cable guide of any preceding claim, wherein the tip end of the elongate support arm includes a pair of spaced apart bracket arms between which the guide head is rotatably connected to the elongate support arm.

7. The cable guide of claim 6, wherein each of the pair of bracket arms includes a journal, the pair of journals at least partially defining the guide head axis of rotation, and wherein the guide head includes a pair of bores, each of the pair of bores in the guide head being configured to receive the journal of one of the respective pair of bracket arms.

8. The cable guide of any of the preceding claims, wherein the elongate support arm comprises:
a base arm portion including the base end; and
a tip arm portion including the tip end,
wherein the tip arm portion is angled relative to the base arm portion by a first support arm angle.

9. The cable guide of claim 8, wherein the first support arm angle is between about 40 degrees and about 70 degrees, and preferably is about 50 degrees.

10. The cable guide of claim 8 or 9, further comprising at least one intermediate arm portion disposed between the base arm portion and the tip arm portion.

11. The cable guide of claim 10, wherein the at least one intermediate arm portion includes one intermediate arm portion, wherein the intermediate arm portion is angled relative to the base arm portion by a second support arm angle, and wherein the tip arm portion is angled relative to the intermediate arm portion by a third support arm angle.

12. The cable guide of claim 11, wherein the second support arm angle is between about 15 degrees and about 30 degrees, and preferably is about 20 degrees.

13. The cable guide of claim 11 or 12, wherein the third support arm angle is between about 20 degrees and about 40 degrees, and preferably is about 30 degrees.

14. The cable guide of any of the preceding claims, wherein the cable guide includes a plane of symmetry that is substantially perpendicular to the support arm axis of rotation.

15. The cable guide of any of the preceding claims, wherein the body of the guide head includes a wall having a through slot open to the passageway in the guide head, and wherein the through slot is configured to receive the one or more feeder cables for positioning the one or more feeder cables within the passageway of the guide head.

16. The cable guide of claim 15, wherein the through slot in the wall of the guide head extends in a direction that is non-parallel to the passageway axis.
